# FASCICULE DE BREVET EUROPEEN

(11) **EP 4 729 415 B1**
(45) Date de publication et mention de la délivrance du brevet: **02.12.2026**
(21) Numéro de dépôt: 25207275.6
(22) Date de dépôt: 07.10.2025
(51) Int. Cl.: B64D 27/12, B64D 27/40, B64C 3/32, B64D 27/18

(54) **AÉRONEF COMPRENANT AU MOINS UN SYSTÈME D'ATTACHE-VOILURE ASSURANT UNE TRANSMISSION OPTIMALE DES EFFORTS DE POUSSÉE**
FLUGZEUG MIT MINDESTENS EINEM TRAGFLÄCHENBEFESTIGUNGSSYSTEM ZUR OPTIMALEN ÜBERTRAGUNG VON SCHUBKRÄFTEN
AIRCRAFT COMPRISING AT LEAST ONE WING ATTACHMENT SYSTEM PROVIDING AN OPTIMAL TRANSMISSION OF THRUST FORCES

(30) Priorité: 16.10.2024 FR 2411204
(43) Date de publication de la demande: 22.04.2026
(73) Titulaire: AIRBUS OPERATIONS (S.A.S.), 31060 Toulouse (FR)
(72) Inventeur: RAZAFINDRABE, Alain, TOULOUSE (FR); FUKASAKU, Kotaro, TOULOUSE (FR); AMARGIER, Rémi, TOULOUSE (FR)
(74) Mandataire: Airbus-OPS SAS

(56) Documents cités:
- FR-A1- 2 887 522
- US-A1- 2005 082 423
- US-A1- 2005 151 008
- US-A1- 2020 262 571
- US-A1- 2022 204 175
- US-A1- 2023 010 520

## Description

La présente demande se rapporte à un aéronef comprenant au moins un système d'attache-voilure assurant une transmission optimale des efforts de poussée.

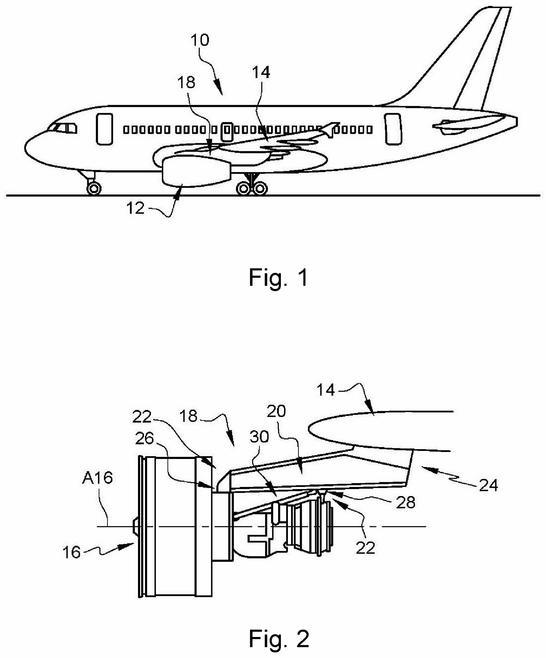

Selon un mode de réalisation conforme à l'art antérieur visible sur les figures 1 et 2, un aéronef 10 comprend plusieurs ensembles propulseurs 12 positionnés sous la voilure 14 de l'aéronef. Chaque ensemble propulseur 12 comprend un moteur 16, une nacelle (non représentée sur la figure 2) positionnée autour du moteur 16 ainsi qu'un mât 18 reliant le moteur 16 et la voilure 14. Le mât 18 comprend une structure primaire 20 qui est reliée au moteur 16 par un système d'attache-moteur 22 et à la voilure 14 par un système d'attache-voilure 24.

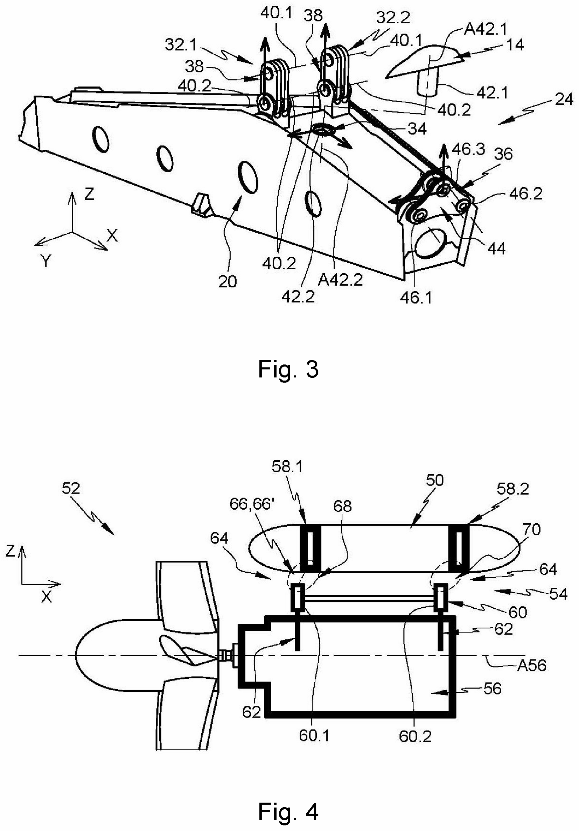

Pour la présente invention, une direction longitudinale (notée X sur la figure 3) est sensiblement parallèle à l'axe de rotation A16 du moteur. Un plan longitudinal est un plan vertical parallèle à la direction longitudinale. Un plan transversal est un plan perpendiculaire à l'axe de rotation A16 du moteur. Une direction transversale horizontale (notée Y sur la figure 3) est une direction horizontale et perpendiculaire à l'axe de rotation A16 du moteur. Une direction verticale est notée Z sur la figure 3. Les termes avant et arrière font référence au sens d'écoulement du flux d'air dans le moteur 16, qui s'écoule de l'avant vers l'arrière.

Le système d'attache-moteur 22 selon l'art antérieur comprend une attache-moteur avant 26, une attache-moteur arrière 28 et un couple de bielles de poussée 30 assurant la reprise des efforts de poussée.

Selon un mode de réalisation conforme à l'art antérieur visible sur la figure 3, le système d'attache-voilure 24 comprend des première et deuxième attaches-voilures avant 32.1, 32.2, une attache-voilure intermédiaire 34 et une attache-voilure arrière 36. Comme illustré sur la figure 3, les première et deuxième attaches-voilures avant 32.1, 32.2 sont configurées pour assurer une reprise des efforts orientés approximativement selon la direction verticale Z. L'attache-voilure intermédiaire 34 est configurée pour assurer une reprise des efforts orientés selon la direction longitudinale et selon la direction transversale et horizontale Y. L'attache-voilure arrière 36 est configurée pour assurer une reprise des efforts orientés selon la direction verticale Z et la direction transversale et horizontale Y.

Selon une configuration, les première et deuxième attaches-voilures avant 32.1, 32.2 ainsi que l'attache-voilure intermédiaire 34 sont reliées à un premier longeron de la voilure 14. L'attache-voilure arrière 36 est reliée à un deuxième longeron de la voilure 14 décalé vers l'arrière selon la direction longitudinale X par rapport au premier longeron.

Selon un mode de réalisation visible sur la figure 3, chacune des première et deuxième attaches-voilures avant 32.1, 32.2 comprend une manille à deux points 38 ; un premier axe de liaison 40.1 reliant la manille à deux points 38 et le premier longeron de la voilure 14, un deuxième axe de liaison 40.2 reliant la manille à deux points 38 et la structure primaire 20. Les premier et deuxième axes de liaison 40.1, 40.2 sont sensiblement parallèles entre eux et à la direction transversale et horizontale Y.

L'attache-voilure intermédiaire 34 est décalée vers l'arrière selon la direction longitudinale X par rapport aux première et deuxième attaches-voilures avant 32.1, 32.2. Cette attache-voilure intermédiaire 34 est de type spigot et comprend un tenon 42.1, sensiblement cylindrique et solidaire du premier longeron de la voilure 14, qui présente un axe A42.1 sensiblement parallèle à la direction verticale Z, ainsi qu'un logement 42.2, prévu au niveau de la structure primaire 20 et configuré pour loger sans jeu le tenon 42.1, qui présente un axe A42.2 sensiblement parallèle à la direction verticale Z.

L'attache-voilure arrière 36 comprend au moins une manille à trois points 44 transversale et approximativement triangulaire, des premier et deuxième axes de liaison 46.1, 46.2 reliant la structure primaire 20 et la manille à trois points 44, un troisième axe de liaison 46.3 reliant le deuxième longeron de la voilure 14 et la manille à trois points 44. Les premier, deuxième et troisième axes de liaison 46.1, 46.2, 46.3 sont sensiblement parallèles entre eux et positionnés dans des plans longitudinaux et verticaux XZ.

Ce mode de réalisation n'est pas pleinement satisfaisant car l'essentiel des efforts de poussée générés par le moteur 16 étant transmis à la voilure 14 uniquement via l'attache-voilure intermédiaire 34, le tenon 42.1 présente un diamètre relativement important, ce qui induit un encombrement relativement important selon la direction transversale et horizontale Y.

Chacun des documents US2005/082423A1, US2023/010520A1, US2005/151008A1 et FR2887522A1 décrit un aéronef comportant un système d'attache-moteur selon l'art antérieur.

### EXPOSE DE L'INVENTION :

La présente invention vise à remédier à tout ou partie des inconvénients de l'art antérieur. A cet effet, l'invention a pour objet un aéronef selon la revendication 1.

Contrairement à l'art antérieur, les efforts de poussée générés par la motorisation ne sont pas exclusivement transmis par l'attache-voilure intermédiaire mais répartis au niveau des première et deuxième attaches-voilures avant et de l'attache-voilure intermédiaire, ce qui contribue à optimiser la transmission desdits efforts de poussée.

Selon une autre caractéristique, chacune des première et deuxième attaches-voilures avant comprend au moins une manille à deux points, un premier axe de liaison reliant la manille à deux points et la structure primaire et un deuxième axe de liaison reliant la manille à deux points et la voilure, les premier et deuxième axes de liaison étant parallèles entre eux et à la direction verticale, le deuxième axe de liaison étant décalé vers l'arrière selon la direction longitudinale par rapport au premier axe de liaison.

Selon une autre caractéristique, pour chacune des première et deuxième attaches-voilures avant, la structure primaire comprend au moins une première patte qui présente un orifice pour loger le premier axe de liaison, la voilure comprenant au moins une deuxième patte qui présente un orifice pour loger le deuxième axe de liaison. En complément, chacune des première et deuxième attaches-voilures avant comprend deux manilles à deux points, sensiblement parallèles et espacées entre elles, entre lesquelles sont positionnées les première et deuxième pattes.

Selon une autre caractéristique, chacune des première et deuxième attaches-voilures avant comprend un tenon cylindrique, solidaire d'un premier élément parmi la structure primaire et la voilure, qui présente un axe sensiblement parallèle à la direction verticale ainsi qu'un logement oblong, configuré pour loger le tenon et solidaire d'un deuxième élément différent du premier élément parmi la structure primaire et la voilure, qui présente une première dimension selon la direction longitudinale égale au diamètre du tenon ainsi qu'une deuxième dimension selon la direction transversale et horizontale supérieure au diamètre du tenon. Selon une autre caractéristique, chaque tenon est solidaire de la structure primaire, le logement oblong étant solidaire de la voilure.

Selon une autre caractéristique, l'attache-voilure intermédiaire comprend au moins une première manille à trois points, des premier et deuxième axes de liaison reliant la première manille à trois points et un premier élément parmi la structure primaire et la voilure, un troisième axe de liaison reliant la première manille à trois points et un deuxième élément différent du premier élément parmi la structure primaire et la voilure ; les premier, deuxième et troisième axes de liaison étant parallèles entre eux et à la direction verticale.

Selon une autre caractéristique, les premier et deuxième axes de liaison relient la première manille à trois points et la structure primaire, le troisième axe de liaison reliant la première manille à trois points et la voilure.

Selon une autre caractéristique, l'attache-voilure intermédiaire comprend une chape solidaire d'un premier élément parmi la structure primaire et la voilure, une patte coopérant avec la chape solidaire d'un deuxième élément différent du premier élément parmi la structure primaire et la voilure ainsi qu'un axe de liaison, parallèle à la direction verticale, reliant la chape et la patte.

Selon une autre caractéristique, l'attache-voilure arrière comprend au moins une deuxième manille à trois points, des premier et deuxième axes de liaison reliant la deuxième manille à trois points et un premier élément parmi la structure primaire et la voilure ainsi qu'un troisième axe de liaison reliant la deuxième manille à trois points et un deuxième élément différent du premier élément parmi la structure primaire et la voilure ; les premier, deuxième et troisième axes de liaison étant parallèles entre eux et à la direction longitudinale.

Selon une autre caractéristique, les premier et deuxième axes de liaison relient la deuxième manille à trois points et la structure primaire, le troisième axe de liaison reliant la deuxième manille à trois points et la voilure.

Selon une autre caractéristique, l'attache-voilure arrière comprend une chape solidaire d'un premier élément parmi la structure primaire et la voilure, une patte coopérant avec la chape solidaire d'un deuxième élément différent du premier élément parmi la structure primaire et la voilure ainsi qu'un axe de liaison, parallèle à la direction longitudinale, reliant la chape et la patte.

Selon une autre caractéristique, la voilure comprend des premier et deuxième longerons, le deuxième longeron étant décalé vers l'arrière selon la direction longitudinale par rapport au premier longeron. En complément, la structure primaire comprend des premier et deuxième renforts transversaux, le deuxième renfort transversal étant décalé vers l'arrière selon la direction longitudinale par rapport au premier renfort transversal, les première et deuxième attaches-voilures avant ainsi que l'attache-voilure intermédiaire reliant le premier longeron et le premier renfort transversal, l'attache-voilure arrière reliant le deuxième longeron et le deuxième renfort transversal.

Selon une autre caractéristique, les première et deuxième attaches-voilures avant ainsi que l'attache-voilure intermédiaire sont positionnées sensiblement dans un même plan transversal.

Selon une autre caractéristique, au moins une attache-voilure parmi une des première et deuxième attaches-voilures avant, l'attache-voilure intermédiaire et l'attache-voilure arrière comprend au moins un élément de liaison, parmi une patte, une chape, une manille à deux points et une manille à trois points, qui présente au moins deux plaques plaquées l'une contre l'autre.

### DESCRIPTION DETAILLEE :

D'autres caractéristiques et avantages ressortiront de la description de l'invention qui va suivre, description donnée à titre d'exemple uniquement, en regard des dessins annexés parmi lesquels :
- la figure 1 est une vue latérale d'un aéronef,
- la figure 2 est une vue latérale d'un ensemble propulseur, sa nacelle n'étant pas représentée,
- la figure 3 est une vue en perspective d'une structure primaire d'un mât et d'un système d'attache-voilure qui illustre un mode de réalisation de l'art antérieur,
- la figure 4 est une représentation schématique latérale d'un ensemble de propulsion illustrant un mode de réalisation de l'invention,
- la figure 5 est une représentation schématique en perspective d'un système d'attache-voilure illustrant un mode de réalisation de l'invention,
- la figure 6 est une vue de face de l'attache-voilure arrière du système d'attache-voilure visible sur la figure 5,
- la figure 7 est une coupe selon la ligne VII-VII de l'attache-voilure arrière visible sur la figure 6,
- la figure 8 est une vue de dessus d'une attache-voilure avant du système d'attache-voilure visible sur la figure 5,
- la figure 9 est une coupe selon la ligne IX-IX de l'attache-voilure avant visible sur la figure 8,
- la figure 10 est une vue de dessus d'une attache-voilure intermédiaire du système d'attache-voilure visible sur la figure 5,
- la figure 11 est une coupe selon la ligne XI-XI de l'attache-voilure intermédiaire visible sur la figure 10,
- la figure 12 est une représentation schématique en perspective d'un système d'attache-voilure illustrant un autre mode de réalisation de l'invention,
- la figure 13 est une vue de face de l'attache-voilure arrière du système d'attache-voilure visible sur la figure 12,
- la figure 14 est une vue de dessus de l'attache-voilure intermédiaire du système d'attache-voilure visible sur la figure 12,
- la figure 15 est une coupe longitudinale de l'attache-voilure avant du système d'attache-voilure visible sur la figure 12, et
- la figure 16 est une vue de dessus de l'attache-voilure avant visible sur la figure 15.

Selon un mode de réalisation visible sur la figure 4, un aéronef comprend une voilure 50 ainsi qu'au moins un ensemble de propulsion 52 positionné sous la voilure 50 et relié à cette dernière par un mât 54.

L'ensemble de propulsion 52 comprend une motorisation 56 qui présente un axe de motorisation A56 parallèle à une direction longitudinale X. Cette motorisation 56 peut indifféremment être un turboréacteur ou un turbopropulseur. Quel que soit le mode de réalisation, la motorisation 56 génère des efforts de poussée orientés selon la direction longitudinale X.

La voilure 50 comprend des premier et deuxième longerons 58.1, 58.2, le deuxième longeron 58.2 étant décalé vers l'arrière selon la direction longitudinale X par rapport au premier longeron 58.1.

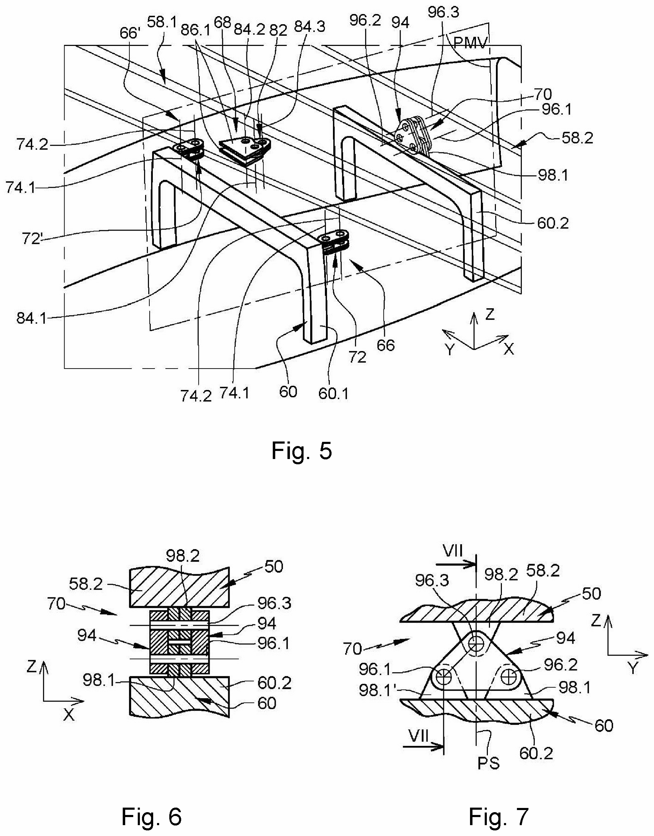

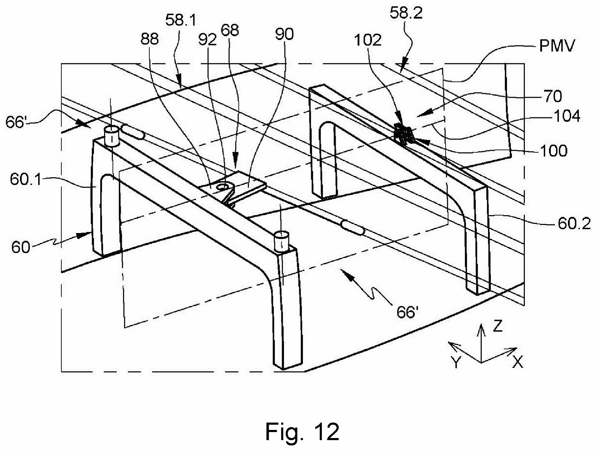

Le mât 54 comprend une structure primaire 60. Cette dernière peut être une structure en berceau, comme illustré sur les figures 5 et 12, ou une structure en caisson en fonction notamment de la nature de la motorisation 56. La structure primaire 60 comprend des premier et deuxième renforts transversaux 60.1, 60.2, le deuxième renfort transversal 60.2 étant décalé vers l'arrière selon la direction longitudinale X par rapport au premier renfort transversal 60.1.

L'ensemble de propulsion 52 comprend au moins un système d'attache-moteur 62 reliant la structure primaire 60 et la motorisation 56 ainsi qu'au moins un système d'attache-voilure 64 reliant la structure primaire 60 et la voilure 50.

La voilure 50, la motorisation 56, la structure primaire 60 et le système d'attache-moteur 62 ne sont pas plus décrits car ils peuvent être identiques à ceux de l'art antérieur.

Le système d'attache-voilure 64 présente un plan médian vertical PMV. Selon une configuration, ce plan médian vertical PMV contient l'axe de motorisation A56.

Le système d'attache-voilure 64 comprend des première et deuxième attaches-voilures avant 66, 66' positionnées de part et d'autre du plan médian vertical PMV, une attache-voilure intermédiaire 68 ainsi qu'une attache-voilure arrière 70. Les attaches-voilures intermédiaire et arrière 68, 70 sont positionnées au niveau du plan médian vertical PMV. Selon un agencement, le plan médian vertical PMV est un plan de symétrie pour les première et deuxième attaches-voilures avant 66, 66'.

Selon une configuration privilégiée, les première et deuxième attaches-voilures avant 66, 66' ainsi que l'attache-voilure intermédiaire 68 relient le premier renfort transversal 60.1 de la structure primaire 60 et le premier longeron 58.1 de la voilure 50. En complément, l'attache-voilure arrière 70 relie le deuxième renfort transversal 60.2 de la structure primaire 60 et le deuxième longeron 58.2 de la voilure 50. Selon cette configuration, les première et deuxième attaches-voilures avant 66, 66' ainsi que l'attache-voilure intermédiaire 68 sont positionnées sensiblement dans le même plan transversal, ce qui limite l'apparition d'un couple selon la direction transversale et horizontale Y dans le premier longeron 58.1.

Chaque attache-voilure avant 66, 66' est configurée pour transmettre des efforts selon la direction longitudinale X. Selon une configuration privilégiée, chaque attache-voilure avant 66, 66' est configurée pour transmettre des efforts uniquement selon la direction longitudinale X.

Selon un premier mode de réalisation visible sur les figures 5, 8 et 9, chacune des première et deuxième attaches-voilures avant 66, 66' comprend au moins une manille à deux points 72, un premier axe de liaison 74.1 reliant la manille à deux points 72 et la structure primaire 60, plus particulièrement le premier renfort transversal 60.1, ainsi qu'un deuxième axe de liaison 74.2 reliant la manille à deux points 72 et la voilure 50, plus particulièrement le premier longeron 58.1 de la voilure 50. Les premier et deuxième axes de liaison 74.1, 74.2 sont parallèles entre eux et à la direction verticale Z, le deuxième axe de liaison 74.2 étant décalé vers l'arrière selon la direction longitudinale X par rapport au premier axe de liaison 74.1. Selon ce premier mode de réalisation, la structure primaire 60 comprend, pour chacune des première et deuxième attaches-voilures avant 66, 66', au moins une première patte 76.1, solidaire du premier renfort transversal 60.1, qui présente un orifice pour loger le premier axe de liaison 74.1. Selon une configuration, chaque première patte 76.1 comprend deux plaques plaquées l'une contre l'autre. En parallèle, la voilure 50 comprend, pour chacune des première et deuxième attaches-voilures avant 66, 66', au moins une deuxième patte 76.2, solidaire du premier longeron 58.1, qui présente un orifice pour loger le deuxième axe de liaison 74.2. Selon une configuration, chaque deuxième patte 76.2 comprend deux plaques plaquées l'une contre l'autre.

Selon un agencement, chacune des première et deuxième attaches-voilures avant 66, 66' comprend deux manilles à deux points 72, 72', sensiblement parallèles et espacées entre elles, entre lesquelles sont positionnées les première et deuxième pattes 76.1, 76.2.

Selon un autre mode de réalisation visible sur les figures 12, 15 et 16, chacune des première et deuxième attaches-voilures avant 66, 66' comprend un tenon 78 cylindrique, solidaire d'un premier élément parmi la structure primaire 60 et la voilure 50, qui présente un axe A78 sensiblement parallèle à la direction verticale Z ainsi qu'un logement oblong 80, configuré pour loger le tenon 78 et solidaire d'un deuxième élément différent du premier élément parmi la structure primaire 60 et la voilure 50, qui présente une première dimension selon la direction longitudinale X égale au diamètre du tenon 78 ainsi qu'une deuxième dimension selon la direction transversale et horizontale Y, nettement supérieure au diamètre du tenon 78. Ainsi, le tenon 78 ne peut pas se translater selon la direction longitudinale X par rapport au logement oblong 80 et peut se translater dans le logement oblong 80 selon la direction transversale et horizontale Y.

Selon une configuration, chaque tenon 78 est solidaire du premier renfort transversal 60.1 de la structure primaire 60 et le logement oblong 80 est solidaire du premier longeron 58.1 de la voilure 50.

Les premier et deuxième modes de réalisation des première et deuxième attaches-voilures avant 66, 66' peuvent être combinés avec les différents modes de réalisation des attaches-voilures intermédiaire et arrière 68, 70.

L'attache-voilure intermédiaire 68 est configurée pour transmettre des efforts selon la direction longitudinale X ainsi que selon la direction transversale et horizontale Y. Selon une configuration privilégiée, l'attache-voilure intermédiaire 68 est configurée pour transmettre des efforts uniquement selon la direction longitudinale X ainsi que selon la direction transversale et horizontale Y.

Selon un premier mode de réalisation visible sur les figures 5, 10 et 11, l'attache-voilure intermédiaire 68 comprend au moins une première manille à trois points 82, des premier et deuxième axes de liaison 84.1, 84.2 reliant la première manille à trois points 82 et un premier élément parmi la structure primaire 60 et la voilure 50, ainsi qu'un troisième axe de liaison 84.3 reliant la première manille à trois points 82 et un deuxième élément différent du premier élément parmi la structure primaire 60 et la voilure 50. Les premier, deuxième et troisième axes de liaison 84.1, 84.2, 84.3 sont parallèles entre eux et à la direction verticale Z. Selon une configuration, chaque manille à trois points 82 comprend deux plaques plaquées l'une contre l'autre.

Selon ce premier mode de réalisation, la structure primaire 60 comprend au moins une première patte 86.1, solidaire du premier renfort transversal 60.1, qui présente au moins un orifice pour loger au moins l'un des premier, deuxième et troisième axes de liaison 84.1, 84.2, 84.3. Selon une configuration, chaque première patte 86.1 comprend deux plaques plaquées l'une contre l'autre. En parallèle, la voilure 50 comprend au moins une deuxième patte 86.2, solidaire du premier longeron 58.1, qui présente au moins un orifice pour loger au moins l'un des premier, deuxième et troisième axes de liaison 84.1, 84.2, 84.3. Selon une configuration, chaque deuxième patte 86.2 comprend deux plaques plaquées l'une contre l'autre.

Selon une configuration, les premier et deuxième axes de liaison 84.1, 84.2 relient la première manille à trois points 82 et le premier renfort transversal 60.1 de la structure primaire 60. Le troisième axe de liaison 84.3 relie la première manille à trois points 82 et le premier longeron 58.1 de la voilure 50. Selon cette configuration, la première patte 86.1 solidaire de la structure primaire 50 comprend deux orifices pour loger les premier et deuxième axes de liaison 84.1, 84.2. La deuxième patte 86.2 solidaire de la voilure 50 comprend un orifice pour loger le troisième axe de liaison 84.3.

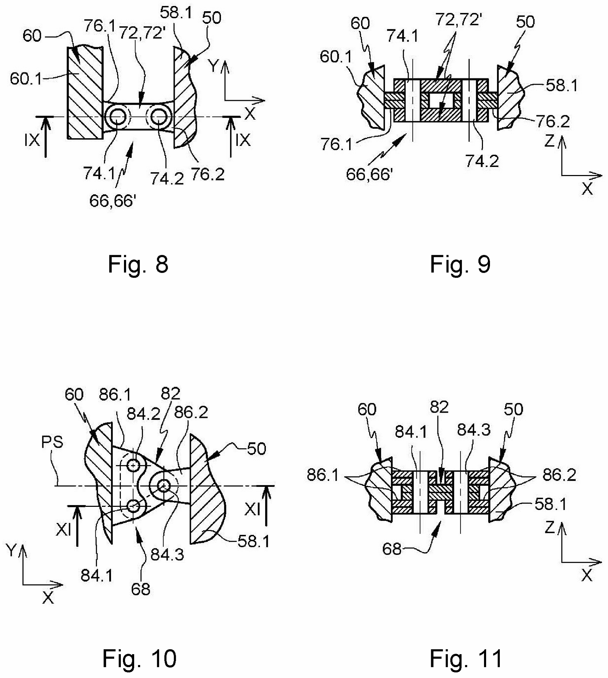

Selon un agencement visible sur la figure 11, l'attache-voilure intermédiaire 68 comprend une unique manille à trois points 82 intercalée entre un couple de premières pattes 86.1 solidaires de la structure primaire 60 ainsi qu'un couple de deuxièmes pattes 86.2 solidaires de la voilure 50.

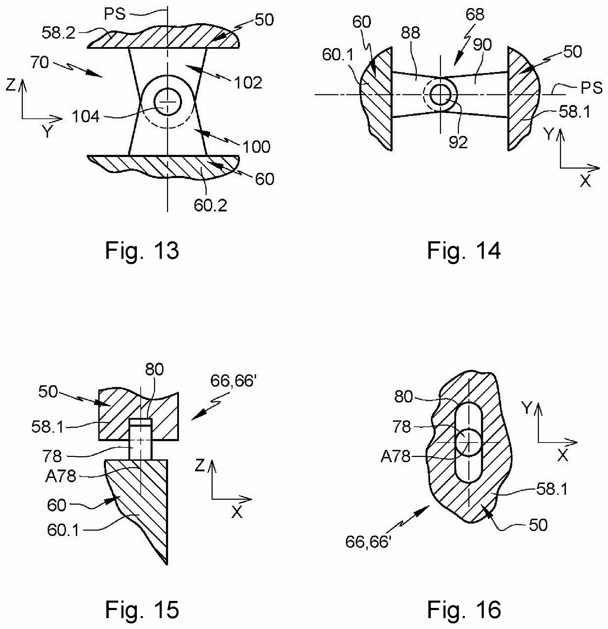

Selon un autre mode de réalisation visible sur les figures 12 et 14, l'attache-voilure intermédiaire 68 comprend une chape 88 solidaire d'un premier élément parmi la structure primaire 60 et la voilure 50, une patte 90 coopérant avec la chape 88 solidaire d'un deuxième élément différent du premier élément parmi la structure primaire 60 et la voilure 50, ainsi qu'un axe de liaison 92, parallèle à la direction verticale Z, reliant la chape 88 et la patte 90. Chaque branche de la chape 88 comprend deux plaques plaquées l'une contre l'autre. La patte 90 peut également comprendre deux plaques plaquées l'une contre l'autre.

Selon un agencement, la chape 88 est solidaire du premier renfort transversal 60.1 de la structure primaire 60 et la patte 90 est solidaire du premier longeron 58.1 de la voilure 50. Les premier et deuxième modes de réalisation de l'attache-voilure intermédiaire 68 peuvent être combinés avec les différents modes de réalisation des attaches-voilures avant et arrière 66, 66', 70.

L'attache-voilure arrière 70 est configurée pour transmettre des efforts selon la direction verticale Z ainsi que selon la direction transversale et horizontale Y. Selon une configuration privilégiée, l'attache-voilure arrière 70 est configurée pour transmettre des efforts uniquement selon la direction verticale Z ainsi que selon la direction transversale et horizontale Y.

Selon un premier mode de réalisation visible sur les figures 5, 6 et 7, l'attache-voilure arrière 70 comprend au moins une deuxième manille à trois points 94, des premier et deuxième axes de liaison 96.1, 96.2 reliant la deuxième manille à trois points 94 et un premier élément parmi la structure primaire 60 et la voilure 50, ainsi qu'un troisième axe de liaison 96.3 reliant la deuxième manille à trois points 94 et un deuxième élément différent du premier élément parmi la structure primaire 60 et la voilure 50. Les premier, deuxième et troisième axes de liaison 96.1, 96.2, 96.3 sont parallèles entre eux et à la direction longitudinale X.

Selon ce premier mode de réalisation, la structure primaire 60 comprend au moins une première patte 98.1, solidaire du deuxième renfort transversal 60.2, qui présente au moins un orifice pour loger au moins l'un des premier, deuxième et troisième axes de liaison 96.1, 96.2, 96.3. Selon une configuration, chaque première patte 98.1 comprend deux plaques plaquées l'une contre l'autre. En parallèle, la voilure 50 comprend au moins une deuxième patte 98.2, solidaire du deuxième longeron 58.2, qui présente au moins un orifice pour loger au moins l'un des premier, deuxième et troisième axes de liaison 96.1, 96.2, 96.3. Selon une configuration, chaque deuxième patte 98.2 comprend deux plaques plaquées l'une contre l'autre.

Selon une configuration, les premier et deuxième axes de liaison 96.1, 96.2 sont solidaires du deuxième renfort transversal 60.2 de la structure primaire 60 et le troisième axe de liaison 96.3 est solidaire du deuxième longeron 58.2 de la voilure 50. Selon cette configuration, la structure primaire 60 comprend deux premières pattes 98.1, 98.1' présentant des orifices pour loger respectivement les premier et deuxième axes de liaison 96.1, 96.2. La deuxième patte 98.2, solidaire de la voilure 50, comprend un orifice pour loger le troisième axe de liaison 96.3.

Selon un agencement visible sur la figure 7, l'attache-voilure arrière 70 comprend deux manilles à trois points 94 entre lesquelles sont positionnées les premières et deuxième pattes 98.1, 98.1', 98.2.

Selon un autre mode de réalisation visible sur les figures 12 et 13, l'attache-voilure arrière 70 comprend une chape 100 solidaire d'un premier élément parmi la structure primaire 60 et la voilure 50, une patte 102 coopérant avec la chape 100 solidaire d'un deuxième élément différent du premier élément parmi la structure primaire 60 et la voilure 50, ainsi qu'un axe de liaison 104, parallèle à la direction longitudinale X, reliant la chape 100 et la patte 102. Chaque branche de la chape 100 comprend deux plaques plaquées l'une contre l'autre. La patte 102 peut également comprendre deux plaques plaquées l'une contre l'autre.

Selon un agencement, la chape 100 est solidaire du deuxième renfort transversal 60.2 de la structure primaire 60 et la patte 102 est solidaire du deuxième longeron 58.2 de la voilure 50. Les premier et deuxième modes de réalisation de l'attache-voilure arrière 70 peuvent être combinés avec les différents modes de réalisation des attaches-voilures avant et intermédiaire 66, 66', 68.

Quel que soit le mode de réalisation, les efforts orientés selon la direction longitudinale X sont transmis par les première et deuxième attaches-voilures avant 66, 66' et l'attache-voilure intermédiaire 68. Les efforts orientés selon la direction transversale et horizontale Y sont transmis par les attaches-voilures intermédiaire et arrière 68, 70. Les efforts orientés selon la direction verticale Z sont transmis par l'attache-voilure arrière 70. Les couples orientés selon la direction longitudinale X sont essentiellement transmis par l'attache-voilure arrière 70. Les couples orientés selon la direction transversale et horizontale Y sont essentiellement transmis par l'attache-voilure intermédiaire 68. Les couples orientés selon la direction verticale Z sont essentiellement transmis par les première et deuxième attaches-voilures avant 66, 66'. L'invention permet de réduire le nombre de pièces du système d'attache-voilure (ce qui contribue à réduire sa masse) et d'obtenir un encombrement en hauteur limité au niveau des attaches-voilures avant et intermédiaire 66, 66' et 68.

Contrairement à l'art antérieur, les efforts de poussées ne sont pas transmis uniquement via l'attache-voilure intermédiaire 68 mais répartis entre les première et deuxième attaches-voilures avant 66, 66' et l'attache-voilure intermédiaire 68, ce qui contribue à réduire les contraintes appliquées à l'attache-voilure intermédiaire 68 et par conséquent sa section dans un plan horizontal. A cet effet, chacune des première et deuxième attaches-voilures avant 66, 66' comprend au moins un axe de pivotement parallèle à la direction verticale Z et est configurée pour permettre un déplacement selon la direction transversale et horizontale Y de la structure primaire 60 par rapport à la voilure 50. Cette solution permet d'obtenir un système d'attache-voilure 64 isostatique.

Selon le premier mode de réalisation visible sur la figure 5, les premier et deuxième axes de liaison 74.1, 74.2 forment deux axes de pivotement et autorisent un déplacement de la structure primaire 60 par rapport à la voilure 50 qui présente une composante selon la direction transversale et horizontale Y. Selon le deuxième mode de réalisation, le tenon 78 forme un axe de pivotement, le logement oblong 80 permettant au tenon 78 de se translater selon la direction transversale et horizontale Y.

Pour obtenir une liaison de sécurité, au moins une attache-voilure parmi une des attaches-voilures avant 66, 66', l'attache-voilure intermédiaire 68 et l'attache-voilure arrière 70 comprend au moins un élément de liaison, parmi une patte 76.1, 76.2, 86.1, 86.2, 90, 98.1, 98.1', 98.2, 102, une chape 88, 100, une manille à deux points 72, 72' et une manille à trois points 82, 94, qui présente au moins deux plaques plaquées l'une contre l'autre.

## Revendications

1. Aéronef comprenant une voilure (50), au moins une motorisation (56) qui présente un axe de motorisation (A56) parallèle à une direction longitudinale (X), perpendiculaire à une direction transversale et horizontale (Y) et une direction verticale (Z), au moins une structure primaire (60) de mât, au moins un système d'attache-moteur reliant la structure primaire (60) et la motorisation (56) ainsi qu'au moins un système d'attache-voilure (64) reliant la voilure (50) et la structure primaire (60), ledit système d'attache-voilure (64) comportant des première et deuxième attaches-voilures avant (66, 66') positionnées de part et d'autre d'un plan médian vertical (PMV) contenant la direction longitudinale (X) et configurées pour transmettre des efforts selon la direction longitudinale (X), une attache-voilure intermédiaire (68) configurée pour transmettre des efforts selon la direction longitudinale (X) et selon la direction transversale et horizontale (Y) ainsi qu'une attache-voilure arrière (70) configurée pour transmettre des efforts selon la direction verticale (Z) et selon la direction transversale et horizontale (Y),
**caractérisé en ce que** chacune des première et deuxième attaches-voilures avant (66, 66') est configurée pour permettre un déplacement selon la direction transversale et horizontale (Y) de la structure primaire (60) par rapport à la voilure (50) et comprend au moins un axe de pivotement parallèle à la direction verticale (Z).

2. Aéronef selon la revendication précédente, **caractérisé en ce que** chacune des première et deuxième attaches-voilures avant (66, 66') comprend au moins une manille à deux points (72), un premier axe de liaison (74.1) reliant la manille à deux points (72) et la structure primaire (60) et un deuxième axe de liaison (74.2) reliant la manille à deux points (72) et la voilure (50), les premier et deuxième axes de liaison (74.1, 74.2) étant parallèles entre eux et à la direction verticale (Z), le deuxième axe de liaison (74.2) étant décalé vers l'arrière selon la direction longitudinale (X) par rapport au premier axe de liaison (74.1).

3. Aéronef selon la revendication précédente, **caractérisé en ce que**, pour chacune des première et deuxième attaches-voilures avant (66, 66'), la structure primaire (60) comprend au moins une première patte (76.1) qui présente un orifice pour loger le premier axe de liaison (74.1), **en ce que**, pour chacune des première et deuxième attaches-voilures avant (66, 66'), la voilure (50) comprend au moins une deuxième patte (76.2) qui présente un orifice pour loger le deuxième axe de liaison (74.2) et **en ce que** chacune des première et deuxième attaches-voilures avant (66, 66') comprend deux manilles à deux points (72, 72'), sensiblement parallèles et espacées entre elles, entre lesquelles sont positionnées les première et deuxième pattes (76.1, 76.2).

4. Aéronef selon la revendication 1, **caractérisé en ce que** chacune des première et deuxième attaches-voilures avant (66, 66') comprend un tenon (78) cylindrique, solidaire d'un premier élément parmi la structure primaire (60) et la voilure (50), qui présente un axe (A78) sensiblement parallèle à la direction verticale (Z) ainsi qu'un logement oblong (80), configuré pour loger le tenon (78) et solidaire d'un deuxième élément différent du premier élément parmi la structure primaire (60) et la voilure (50), qui présente une première dimension selon la direction longitudinale (X) égale au diamètre du tenon (78) ainsi qu'une deuxième dimension selon la direction transversale et horizontale (Y) supérieure au diamètre du tenon (78).

5. Aéronef selon la revendication précédente, **caractérisé en ce que** chaque tenon (78) est solidaire de la structure primaire (60), le logement oblong (80) étant solidaire de la voilure (50).

6. Aéronef selon l'une des revendications précédentes, **caractérisé en ce que** l'attache-voilure intermédiaire (68) comprend au moins une première manille à trois points (82), des premier et deuxième axes de liaison (84.1, 84.2) reliant la première manille à trois points (82) et un premier élément parmi la structure primaire (60) et la voilure (50), ainsi qu'un troisième axe de liaison (84.3) reliant la première manille à trois points (82) et un deuxième élément différent du premier élément parmi la structure primaire (60) et la voilure (50) ; les premier, deuxième et troisième axes de liaison (84.1, 84.2, 84.3) étant parallèles entre eux et à la direction verticale (Z).

7. Aéronef selon la revendication précédente, **caractérisé en ce que** les premier et deuxième axes de liaison (84.1, 84.2) relient la première manille à trois points (82) et la structure primaire (60), le troisième axe de liaison (84.3) reliant la première manille à trois points (82) et la voilure (50).

8. Aéronef selon l'une des revendications 1 à 5, **caractérisé en ce que** l'attache-voilure intermédiaire (68) comprend une chape (88) solidaire d'un premier élément parmi la structure primaire (60) et la voilure (50), une patte (90) coopérant avec la chape (88) solidaire d'un deuxième élément différent du premier élément parmi la structure primaire (60) et la voilure (50) ainsi qu'un axe de liaison (92), parallèle à la direction verticale (Z), reliant la chape (88) et la patte (90).

9. Aéronef selon l'une des revendications précédentes, **caractérisé en ce que** l'attache-voilure arrière (70) comprend au moins une deuxième manille à trois points (94), des premier et deuxième axes de liaison (96.1, 96.2) reliant la deuxième manille à trois points (94) et un premier élément parmi la structure primaire (60) et la voilure (50) et un troisième axe de liaison (96.3) reliant la deuxième manille à trois points (94) et un deuxième élément différent du premier élément parmi la structure primaire (60) et la voilure (50) ; les premier, deuxième et troisième axes de liaison (96.1, 96.2, 96.3) étant parallèles entre eux et à la direction longitudinale (X).

10. Aéronef selon la revendication précédente, **caractérisé en ce que** les premier et deuxième axes de liaison (96.1, 96.2) relient la deuxième manille à trois points (94) et la structure primaire (60), le troisième axe de liaison (96.3) reliant la deuxième manille à trois points (94) et la voilure (50).

11. Aéronef selon l'une des revendications 1 à 8, **caractérisé en ce que** l'attache-voilure arrière (70) comprend une chape (100) solidaire d'un premier élément parmi la structure primaire (60) et la voilure (50), une patte (102) coopérant avec la chape (100) solidaire d'un deuxième élément différent du premier élément parmi la structure primaire (60) et la voilure (50) ainsi qu'un axe de liaison (104), parallèle à la direction longitudinale (X), reliant la chape (100) et la patte (102).

12. Aéronef selon l'une des revendications précédentes, **caractérisé en ce que** la voilure (50) comprend des premier et deuxième longerons (58.1, 58.2), le deuxième longeron (58.2) étant décalé vers l'arrière selon la direction longitudinale (X) par rapport au premier longeron (58.1), **en ce que** la structure primaire (60) comprend des premier et deuxième renforts transversaux (60.1, 60.2), le deuxième renfort transversal (60.2) étant décalé vers l'arrière selon la direction longitudinale (X) par rapport au premier renfort transversal (60.1) et **en ce que** les première et deuxième attaches-voilures avant (66, 66') ainsi que l'attache-voilure intermédiaire (68) relient le premier longeron (58.1) et le premier renfort transversal (60.1), l'attache-voilure arrière (70) reliant le deuxième longeron (58.2) et le deuxième renfort transversal (60.2).

13. Aéronef selon l'une des revendications précédentes, **caractérisé en ce que** les première et deuxième attaches-voilures avant (66, 66') ainsi que l'attache-voilure intermédiaire (68) sont positionnées sensiblement dans un même plan transversal.

14. Aéronef selon l'une des revendications précédentes, **caractérisé en ce qu'**au moins une attache-voilure parmi une des première et deuxième attaches-voilures avant (66, 66'), l'attache-voilure intermédiaire (68) et l'attache-voilure arrière (70) comprend au moins un élément de liaison, parmi une patte (76.1, 76.2, 86.1, 86.2, 90, 98.1, 98.1', 98.2, 102), une chape (88, 100), une manille à deux points (72, 72') et une manille à trois points (82, 94), qui présente au moins deux plaques plaquées l'une contre l'autre.

## Patentansprüche

1. Luftfahrzeug, umfassend eine Tragfläche (50), mindestens eine Motorisierung (56), die eine Motorisierungsachse (A56) parallel zu einer Längsrichtung (X), senkrecht zu einer Quer- und Horizontalrichtung (Y) und einer Vertikalrichtung (Z) aufweist, mindestens eine Primärstruktur (60) eines Pylons, mindestens ein Triebwerksbefestigungssystem, das die Primärstruktur (60) und die Motorisierung (56) verbindet, sowie mindestens ein Tragflächenbefestigungssystem (64), das die Tragfläche (50) und die Primärstruktur (60) verbindet, wobei das Tragflächenbefestigungssystem (64) eine erste und eine zweite vordere Tragflächenbefestigung (66, 66'), die beidseits einer die Längsrichtung (X) enthaltenden vertikalen Mittelebene (PMV) angeordnet sind und dazu ausgebildet sind, Kräfte entlang der Längsrichtung (X) zu übertragen, eine mittlere Tragflächenbefestigung (68), die dazu ausgebildet ist, Kräfte entlang der Längsrichtung (X) und entlang der Quer- und Horizontrichtung (Y) zu übertragen, sowie eine hintere Tragflächenbefestigung (70), die dazu ausgebildet ist, Kräfte entlang der Vertikalrichtung (Z) und entlang der Quer- und Horizontalrichtung (Y) zu übertragen, beinhaltet,
**dadurch gekennzeichnet, dass** jede der ersten und zweiten vorderen Tragflächenbefestigungen (66, 66') dazu ausgebildet ist, eine Verlagerung entlang der Quer- und Horizontrichtung (Y) der Primärstruktur (60) in Bezug auf die Tragfläche (50) zu ermöglichen und mindestens eine Schwenkachse parallel zu der Vertikalrichtung (Z) umfasst.

2. Luftfahrzeug nach dem vorhergehenden Anspruch, **dadurch gekennzeichnet, dass** jede der ersten und zweiten vorderen Tragflächenbefestigungen (66, 66') mindestens einen Zweipunktbügel (72), einen ersten Verbindungsbolzen (74.1), der den Zweipunktbügel (72) und die Primärstruktur (60) verbindet, und einen zweiten Verbindungsbolzen (74.2), der den Zweipunktbügel (72) und die Tragfläche (50) verbindet, umfasst, wobei der erste und der zweite Verbindungsbolzen (74.1, 74.2) parallel zueinander und zu der Vertikalrichtung (Z) sind, wobei der zweite Verbindungsbolzen (74.2) entlang der Längsrichtung (X) in Bezug auf den ersten Verbindungsbolzen (74.1) nach hinten versetzt ist.

3. Luftfahrzeug nach dem vorhergehenden Anspruch, **dadurch gekennzeichnet, dass** die Primärstruktur (60) für jede der ersten und zweiten vorderen Tragflächenbefestigungen (66, 66') mindestens eine erste Lasche (76.1) umfasst, die eine Öffnung zum Aufnehmen des ersten Verbindungsbolzens (74.1) aufweist, dass die Tragfläche (50) für jede der ersten und zweiten vorderen Tragflächenbefestigungen (66, 66') mindestens eine zweite Lasche (76.2) umfasst, die eine Öffnung zum Aufnehmen des zweiten Verbindungsbolzens (74.2) aufweist, und dass jede der ersten und zweiten vorderen Tragflächenbefestigungen (66, 66') zwei Zweipunktbügel (72, 72') umfasst, die im Wesentlichen parallel und voneinander beabstandet sind und zwischen denen die erste und die zweite Lasche (76.1, 76.2) angeordnet sind.

4. Luftfahrzeug nach Anspruch 1, **dadurch gekennzeichnet, dass** jede der ersten und zweiten vorderen Tragflächenbefestigungen (66, 66') einen zylindrischen Zapfen (78) umfasst, der mit einem ersten Element unter der Primärstruktur (60) und der Tragfläche (50) integral ausgebildet ist und der eine Achse (A78) aufweist, die im Wesentlichen parallel zu der Vertikalrichtung (Z) ist, sowie eine längliche Aufnahme (80), die zum Aufnehmen des Zapfens (78) ausgebildet ist und mit einem zweiten Element unter der Primärstruktur (60) und der Tragfläche (50), das von dem ersten Element verschieden ist, integral ausgebildet ist und ein erstes Maß entlang der Längsrichtung (X), das gleich dem Durchmesser des Zapfens (78) ist, und ein zweites Maß entlang der Quer- und Horizontalrichtung (Y), das größer als der Durchmesser des Zapfens (78) ist, aufweist.

5. Luftfahrzeug nach dem vorhergehenden Anspruch, **dadurch gekennzeichnet, dass** jeder Zapfen (78) mit der Primärstruktur (60) integral ausgebildet ist, wobei die längliche Aufnahme (80) mit der Tragfläche (50) integral ausgebildet ist.

6. Luftfahrzeug nach einem der vorhergehenden Ansprüche, **dadurch gekennzeichnet, dass** die mittlere Tragflächenbefestigung (68) mindestens einen ersten Dreipunktbügel (82), einen ersten und einen zweiten Verbindungsbolzen (84.1, 84.2), die den ersten Dreipunktbügel (82) und ein erstes Element unter der Primärstruktur (60) und der Tragfläche (50) verbinden, sowie einen dritten Verbindungsbolzen (84.3), der den ersten Dreipunktbügel (82) und ein zweites Element unter der Primärstruktur (60) und der Tragfläche (50), das von dem ersten Element verschieden ist, verbindet, umfasst; wobei der erste, zweite und dritte Verbindungsbolzen (84.1, 84.2, 84.3) parallel zueinander und zu der Vertikalrichtung (Z) sind.

7. Luftfahrzeug nach dem vorhergehenden Anspruch, **dadurch gekennzeichnet, dass** der erste und der zweite Verbindungsbolzen (84.1, 84.2) den ersten Dreipunktbügel (82) und die Primärstruktur (60) verbinden, wobei der dritte Verbindungsbolzen (84.3) den ersten Dreipunktbügel (82) und die Tragfläche (50) verbindet.

8. Luftfahrzeug nach einem der Ansprüche 1 bis 5, **dadurch gekennzeichnet, dass** die mittlere Tragflächenbefestigung (68) einen Gabelkopf (88), der mit einem ersten Element unter der Primärstruktur (60) und der Tragfläche (50) integral ausgebildet ist, eine Lasche (90), die mit dem Gabelkopf (88) zusammenwirkt und mit einem zweiten Element unter der Primärstruktur (60) und der Tragfläche (50), das von dem ersten Element verschieden ist, integral ausgebildet ist, sowie einen Verbindungsbolzen (92), der parallel zu der Vertikalrichtung (Z) ist und den Gabelkopf (88) und die Lasche (90) verbindet, umfasst.

9. Luftfahrzeug nach einem der vorhergehenden Ansprüche, **dadurch gekennzeichnet, dass** die hintere Tragflächenbefestigung (70) mindestens einen zweiten Dreipunktbügel (94), einen ersten und einen zweiten Verbindungsbolzen (96.1, 96.2), die den zweiten Dreipunktbügel (94) und ein erstes Element unter der Primärstruktur (60) und der Tragfläche (50) verbinden, und einen dritten Verbindungsbolzen (96.3), der den zweiten Dreipunktbügel (94) und ein zweites Element unter der Primärstruktur (60) und der Tragfläche (50), das von dem ersten Element verschieden ist, verbindet, umfasst; wobei der erste, zweite und dritte Verbindungsbolzen (96.1, 96.2, 96.3) parallel zueinander und zu der Längsrichtung (X) sind.

10. Luftfahrzeug nach dem vorhergehenden Anspruch, **dadurch gekennzeichnet, dass** der erste und der zweite Verbindungsbolzen (96.1, 96.2) den zweiten Dreipunktbügel (94) und die Primärstruktur (60) verbinden, wobei der dritte Verbindungsbolzen (96.3) den zweiten Dreipunktbügel (94) und die Tragfläche (50) verbindet.

11. Luftfahrzeug nach einem der Ansprüche 1 bis 8, **dadurch gekennzeichnet, dass** die hintere Tragflächenbefestigung (70) einen Gabelkopf (100), der mit einem ersten Element unter der Primärstruktur (60) und der Tragfläche (50) integral ausgebildet ist, eine Lasche (102), die mit dem Gabelkopf (100) zusammenwirkt und mit einem zweiten Element unter der Primärstruktur (60) und der Tragfläche (50), das von dem ersten Element verschieden ist, integral ausgebildet ist, sowie einen Verbindungsbolzen (104), der parallel zu der Längsrichtung (X) ist und den Gabelkopf (100) und die Lasche (102) verbindet, umfasst.

12. Luftfahrzeug nach einem der vorhergehenden Ansprüche, **dadurch gekennzeichnet, dass** die Tragfläche (50) einen ersten und einen zweiten Holm (58.1, 58.2) umfasst, wobei der zweite Holm (58.2) entlang Längsrichtung (X) in Bezug auf den ersten Holm (58.1) nach hinten versetzt ist, dass die Primärstruktur (60) eine erste und eine zweite Querverstärkung (60.1, 60.2) umfasst, wobei die zweite Querverstärkung (60.2) entlang der Längsrichtung (X) in Bezug auf die erste Querverstärkung (60.1) nach hinten versetzt ist, und dass die erste und die zweite vordere Tragflächenbefestigung (66, 66') sowie die mittlere Tragflächenbefestigung (68) den ersten Holm (58.1) und die erste Querverstärkung (60.1) verbinden, wobei die hintere Tragflächenbefestigung (70) den zweiten Holm (58.2) und die zweite Querverstärkung (60.2) verbindet.

13. Luftfahrzeug nach einem der vorhergehenden Ansprüche, **dadurch gekennzeichnet, dass** die erste und die zweite vordere Tragflächenbefestigung (66, 66') sowie die mittlere Tragflächenbefestigung (68) im Wesentlichen in einer selben Querebene angeordnet sind.

14. Luftfahrzeug nach einem der vorhergehenden Ansprüche, **dadurch gekennzeichnet, dass** mindestens eine Tragflächenbefestigung unter einer der ersten und der zweiten vorderen Tragflächenbefestigungen (66, 66'), der mittleren Tragflächenbefestigung (68) und der hinteren Tragflächenbefestigung (70) mindestens ein Verbindungselement unter einer Lasche (76.1, 76.2, 86.1, 86.2, 90, 98.1, 98.1', 98.2, 102), einem Gabelkopf (88, 100), einem Zweipunktbügel (72, 72') und einem Dreipunktbügel (82, 94) umfasst, das mindestens zwei gegeneinander gepresste Platten aufweist.

## Claims

1. Aircraft including wings (50), at least one engine assembly (56) that has an engine assembly axis (A56) parallel to a longitudinal direction (X) perpendicular to a transverse and horizontal direction (Y) and a vertical direction (Z), at least one primary pylon structure (60), at least one engine assembly system connecting the primary structure (60) and the engine assembly (56) and at least one wing attachment system (64) connecting the wings (50) and the primary structure (60), said wing attachment system (64) including first and second front wing attachments (66, 66') positioned on respective opposite sides of a median vertical plane (PMV) containing the longitudinal direction (X) and configured to transmit forces in the longitudinal direction (X), an intermediate wing attachment (68) configured to transmit forces in the longitudinal direction (X) and in the transverse and horizontal direction (Y), and a rear wing attachment (70) configured to transmit forces in the vertical direction (Z) and in the transverse and horizontal direction (Y),
which aircraft is **characterized in that** each of the first and second front wing attachments (66, 66') is configured to allow movement in the transverse and horizontal direction (Y) of the primary structure (60) relative to the wings (50) and includes at least one pivot rod parallel to the vertical direction (Z).

2. Aircraft according to the preceding claim, **characterized in that** each of the first and second front wing attachments (66, 66') includes at least one two-point link (72), a first connecting rod (74.1) connecting the two-point link (72) and the primary structure (60), and a second connecting rod (74.2) connecting the two-point link (72) and the wings (50), the first and second connecting rods (74.1, 74.2) being parallel to one another and to the vertical direction (Z), the second connecting rod (74.2) being offset towards the rear in the longitudinal direction (X) relative to the first connecting rod (74.1).

3. Aircraft according to the preceding claim, **characterized in that**, for each of the first and second front wing attachments (66, 66'), the primary structure (60) includes at least one first lug (76.1) that includes an orifice to accommodate the first connecting rod (74.1), **in that**, for each of the first and second front wing attachments (66, 66'), the wings (50) include at least one second lug (76.2) that includes an orifice to accommodate the second connecting rod (74.2), and **in that** each of the first and second front wing attachments (66, 66') includes two two-point links (72, 72') substantially parallel to one another and spaced from one another between which the first and second lugs (76.1, 76.2) are positioned.

4. Aircraft according to Claim 1, **characterized in that** each of the first and second front wing attachments (66, 66') includes a cylindrical tenon (78) rigidly attached to a first element of the combination comprising the primary structure (60) and the wings (50) which has an axis (A78) substantially parallel to the vertical direction (Z) and an oblong housing (80) configured to accommodate the tenon (78) and rigidly attached to a second element different from the first element of the combination comprising the primary structure (60) and the wings (50) which has a first dimension in the longitudinal direction (X) equal to the diameter of the tenon (78) and a second dimension in the transverse and horizontal direction (Y) greater than the diameter of the tenon (78).

5. Aircraft according to the preceding claim, **characterized in that** each tenon (78) is rigidly attached to the primary structure (60), the oblong housing (80) being rigidly attached to the wings (50).

6. Aircraft according to any of the preceding claims, **characterized in that** the intermediate wing attachment (68) includes at least one first three-point link (82), first and second connecting rods (84.1, 84.2) connecting the first three-point link (82) and a first element of the combination comprising the primary structure (60) and the wings (50), and a third connecting rod (84.3) connecting the first three-point link (82) and a second element different from the first element of the combination comprising the primary structure (60) and the wings (50); the first, second and third connecting rods (84.1, 84.2, 84.3) being parallel to one another and to the vertical direction (Z).

7. Aircraft according to the preceding claim, **characterized in that** the first and second connecting rods (84.1, 84.2) connect the first three-point link (82) and the primary structure (60), the third connecting rod (84.3) connecting the first three-point link (82) and the wings (50).

8. Aircraft according to any of Claims 1 to 5, **characterized in that** the intermediate wing attachment (68) includes a yoke (88) rigidly attached to a first element of the combination comprising the primary structure (60) and the wings (50), a lug (90) cooperating with the yoke (88) rigidly attached to a second element different from the first element of the combination comprising the primary structure (60) and the wings (50), and a connecting rod (92) parallel to the vertical direction (Z) connecting the yoke (88) and the lug (90).

9. Aircraft according to any of the preceding claims, **characterized in that** the rear wing attachment (70) includes at least one second three-point link (94), first and second connecting rods (96.1, 96.2) connecting the second three-point link (94) and a first element of the combination comprising the primary structure (60) and the wings (50), and a third connecting rod (96.3) connecting the second three-point link (94) and a second element different from the first element of the combination comprising the primary structure (60) and the wings (50); the first, second and third connecting rods (96.1, 96.2, 96.3) being parallel to one another and to the longitudinal direction (X).

10. Aircraft according to the preceding claim, **characterized in that** the first and second connecting rods (96.1, 96.2) connect the second three-point link (94) and the primary structure (60), the third connecting rod (96.3) connecting the second three-point link (94) and the wings (50).

11. Aircraft according to any of Claims 1 to 8, **characterized in that** the rear wing attachment (70) includes a yoke (100) rigidly attached to a first element of the combination comprising the primary structure (60) and the wings (50), a lug (102) cooperating with the yoke (100) rigidly attached to a second element different from the first element of the combination comprising the primary structure (60) and the wings (50), and a connecting rod (104) parallel to the longitudinal direction (X) connecting the yoke (100) and the lug (102).

12. Aircraft according to any of the preceding claims, **characterized in that** the wings (50) include first and second spars (58.1, 58.2), the second spar (58.2) being offset towards the rear in the longitudinal direction (X) relative to the first spar (58.1), **in that** the primary structure (60) includes first and second transverse reinforcements (60.1, 60.2), the second transverse reinforcement (60.2) being offset towards the rear in the longitudinal direction (X) relative to the first transverse reinforcement (60.1), and **in that** the first and second front wing attachments (66, 66') and the intermediate wing attachment (68) connect the first spar (58.1) and the first transverse reinforcement (60.1), the rear wing attachment (70) connecting the second spar (58.2) and the second transverse reinforcement (60.2).

13. Aircraft according to any of the preceding claims, **characterized in that** the first and second front wing attachments (66, 66') and the intermediate wing attachment (68) are positioned in substantially the same transverse plane.

14. Aircraft according to any of the preceding claims, **characterized in that** at least one wing attachment from one of the first and second front wing attachments (66, 66'), the intermediate wing attachment (68) and the rear wing attachment (70) includes at least one connecting element consisting of a lug (76.1, 76.2, 86.1, 86.2, 90, 98.1, 98.1', 98.2, 102), a yoke (88, 100), a two-point link (72, 72') and a three-point link (82, 94) that comprises at least two plates pressed one against the other.
